# FASCICULE DE BREVET EUROPEEN

(11) **EP 2 655 503 B1**
(45) Date de publication et mention de la délivrance du brevet: **25.02.2015**
(21) Numéro de dépôt: 11808186.8
(22) Date de dépôt: 19.12.2011
(51) Int. Cl.: C08L 7/00, C08L 9/00, C08L 9/06, B60C 1/00, C08L 67/02, C08L 91/00

(54) **PNEUMATIQUE DONT LA BANDE DE ROULEMENT COMPORTE UNE RESINE POLY(ALKYLENE-ESTER)**
REIFEN MIT LAUFFLÄCHE AUS EINEM POLY(ALKYLENESTER)HARZ
TYRE, THE TREAD OF WHICH COMPRISES A POLY(ALKYLENE ESTER) RESIN

(30) Priorité: 23.12.2010 FR 1061109
(43) Date de publication de la demande: 30.10.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: VASSEUR, Didier, 63040 Clermont-ferrand Cedex 9 (FR); CUSCITO, Olivia, 63040 Clermont-ferrand Cedex 9 (FR)
(74) Mandataire: Ribière, Joel
(86) Numéro de dépôt international: PCT/EP2011/073272
(87) Numéro de publication internationale: WO 2012/084847

(56) Documents cités:
- EP-A2- 1 749 855
- WO-A1-02/072689
- FR-A1- 2 910 905

## Description

La présente invention est relative aux bandes de roulement de pneumatiques et aux compositions de caoutchouc à base d'élastomère diénique, utilisables pour la fabrication de telles bandes de roulement de pneumatiques.

Une bande de roulement de pneumatique doit obéir de manière connue à un grand nombre d'exigences techniques, souvent antinomiques, parmi lesquelles une résistance élevée à l'usure, une faible résistance au roulement, ainsi qu'une adhérence élevée sur route sèche comme mouillée. Elle doit également offrir un bon comportement routier au pneumatique.

Ces compromis de propriétés, en particulier du point de vue de la résistance au roulement et de résistance à l'usure, ont pu être améliorés ces dernières années sur les « Pneus Verts » à faible consommation d'énergie, destinés notamment aux véhicules tourisme, grâce notamment à l'emploi de nouvelles compositions de caoutchouc faiblement hystérétiques ayant pour caractéristique d'être renforcées majoritairement de charges inorganiques spécifiques qualifiées de renforçantes, notamment de silices hautement dispersibles dites "HDS" (Highly Dispersible Silica), capables de rivaliser, du point de vue du pouvoir renforçant, avec les noirs de carbone conventionnels de grade pneumatique.

Pour améliorer le comportement routier, on le sait, une rigidité supérieure de la bande de roulement ou du sommet du pneumatique est souhaitable. L'augmentation de la rigidité peut être obtenue par exemple en augmentant le taux de charge renforçante ou en incorporant certaines résines renforçantes dans les compositions de caoutchouc constitutives de cette bande de roulement (voir par exemple WO 02/10269), ou en disposant une sous-couche élastomère entre la ceinture et la partie externe de la bande de roulement du pneumatique, présentant une rigidité supérieure à celle de ladite partie externe.

Toutefois, de manière connue, une telle augmentation de la rigidité de la bande de roulement peut pénaliser les propriétés d'hystérèse et donc la résistance au roulement des pneumatiques.

Au cours de leurs recherches, les Demanderesses ont découvert une composition de caoutchouc qui, utilisée comme bande de roulement de pneumatique, permet d'améliorer la rigidité de la bande de roulement du pneumatique donc le comportement routier, sans affecter la résistance au roulement.

Ainsi, l'invention concerne un pneumatique dont la bande de roulement comprend une composition de caoutchouc comportant au moins :
- un élastomère diénique ;
- 100 à 150 pce d'une charge inorganique renforçante ;
- une résine thermoplastique poly (alkylène-ester) ;
- un système plastifiant comprenant :
   - selon un taux A compris entre 5 et 60 pce, une résine hydrocarbonée présentant une Tg supérieure à 20°C ;
   - selon un taux B compris entre 5 et 60 pce, un plastifiant liquide à 20°C dont la Tg est inférieure à -20°C ;
   - étant entendu que A+B est supérieur à 40 pce.

Les pneumatiques de l'invention sont particulièrement destinés à équiper des véhicules à moteur de type tourisme, incluant les véhicules 4x4 (à quatre roues motrices) et les véhicules SUV (*"Sport Utility Vehicles*"), des véhicules deux roues (notamment motos) comme des véhicules industriels choisis en particulier parmi camionnettes et "Poids-lourd" tels que bus, engins de transport routier tels que camions.

L'invention ainsi que ses avantages seront aisément compris à la lumière de la description et des exemples de réalisation qui suivent.

### I - MESURES ET TESTS UTILISES

Les compositions de caoutchouc utilisées dans les pneumatiques selon l'invention sont caractérisées après cuisson, comme indiqué ci-après.

### I-1. Essais de traction

Ces essais permettent de déterminer les contraintes d'élasticité et les propriétés à la rupture. Sauf indication différente, ils sont effectués conformément à la norme française NF T 46-002 de septembre 1988. On mesure à la première élongation les modules sécants nominaux (ou contraintes apparentes, en MPa) à 10% d'allongement (noté MA10). Toutes ces mesures de traction sont effectuées dans les conditions normales de température (23 ± 2°C) et d'hygrométrie (50 ± 5% d'humidité relative), selon la norme française NF T 40-101 (décembre 1979).

### I.2 - Propriétés dynamiques

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz.

On effectue un balayage en amplitude de déformation de 0,1 à 50% (cycle aller), puis de 50% à 1% (cycle retour). Le résultat exploité est le facteur de perte tan(δ). Pour le cycle retour, on indique la valeur maximale de tan(δ) observée, noté tan(δ)ₘₐₓ à 23°C.

On rappelle que, de manière bien connue de l'homme du métier, la valeur de tan(δ)ₘₐₓ à 23°C est représentative de l'hystérèse du matériau donc de la résistance au roulement : plus tan(δ)ₘₐₓ à 23°C est faible, plus la résistance au roulement est basse.

### II - DESCRIPTION DETAILLEE DE L'INVENTION

Dans la présente description, sauf indication expresse différente, tous les pourcentages (%) indiqués sont des pourcentages en masse.

L'abréviation "pce" (usuellement *"phr"* en anglais) signifie parties en poids pour cent parties d'élastomère ou caoutchouc (du total des élastomères si plusieurs élastomères sont présents).

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Toutes les valeurs de température de transition vitreuse « Tg » sont mesurées de manière connue par DSC (Differential Scanning Calorimetry) selon la norme ASTM D3418 (1999).

Le pneumatique de l'invention a donc pour caractéristique essentielle que sa bande de roulement comporte une composition de caoutchouc comprenant au moins un élastomère diénique, une charge inorganique renforçante, un système plastifiant spécifique et une résine poly(alkylène-ester), composants qui vont être décrits en détail ci-après.

### II.1 - Elastomère diénique

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

L'élastomère diénique est choisi préférentiellement dans le groupe constitué par les polybutadiènes (BR), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à la charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre -5°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -5°C et -70°C.

Selon un autre mode particulier de réalisation, l'élastomère diénique est choisi dans le groupe constitué par les polybutadiènes, les copolymères de butadiène et les mélanges de ces élastomères. Plus préférentiellement, il s'agit d'un copolymère styrène-butadiène (SBR).

Selon un mode de réalisation particulier, la composition comporte de 50 à 100 pce d'un élastomère SBR, qu'il s'agisse d'un SBR préparé en émulsion ("ESBR") ou d'un SBR préparé en solution ("SSBR").

Selon d'autres modes de réalisation possibles, l'élastomère diénique est un coupage SBR/NR (ou SBR/IR), BR/NR (ou BR/IR), ou encore SBR/BR/NR (ou SBR/BR/IR).

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est un élastomère isoprénique. Par "élastomère isoprénique", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode préférentiel de réalisation de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple entre 30 et 90 pce, en particulier entre 40 et 90 pce, d'un élastomère à haute Tg en coupage avec un élastomère à basse Tg.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les compositions de l'invention peuvent contenir un seul élastomère diénique ou un mélange de plusieurs élastomères diéniques.

### II.2 - Résine poly(alkylène-ester)

La bande de roulement du pneumatique selon l'invention comporte une composition de caoutchouc qui a pour caractéristique essentielle de comporter une résine poly(alkylène-ester) qui est par définition un polymère solide à température ambiante (20°C), et thermoplastique.

De préférence cette résine présente une température de transition vitreuse (Tg) comprise entre -70°C et 30°C, plus préférentiellement entre -60°C et 20°C. La température de fusion (mesurée par DSC) est préférentiellement supérieure à 80°C, en particulier comprise entre 80 et 150°C.

Selon un mode préférentiel, l'ester de cette résine est choisi dans le groupe constitué par les adipates, les succinates et leurs mélanges. A ces esters peuvent être éventuellement associés des co-esters tels que par exemple des carbonates ou des térephtalates.

Selon un autre mode de réalisation préférentiel, l'alkylène de cette résine est choisi dans le groupe constitué par méthylène, éthylène, propylène, butylène. Plus préférentiellement l'alkylène est le butylène.

Selon un autre mode de réalisation de l'invention, la résine poly(alkylène-ester) est choisie dans le groupe constitué par les poly(alkylène-adipate), les poly(alkylène-succinate) et leurs mélanges. A titre d'exemples, on peut citer notamment, le poly(butylène succinate-adipate) (en abrégé PBSA), le poly(butylène-succinate) (en abrégé PBS), le poly(butylène adipate-téréphtalate) (en abrégé PBAT).

Les résines poly(alkylène-ester) sont bien connues comme plastiques biodégradables, et vendues particulièrement pour l'industrie de l'emballage. De tels produits ont été également décrits comme additifs de caoutchouterie dans des compositions de caoutchouc pour bande de roulement de pneumatiques faiblement chargées en silice, pour améliorer leur propriété de résistance au roulement (voir US2007/0032593 ou EP 1749855).

Ces produits sont disponibles commercialement, par exemple le poly(butylène succinate) est commercialisé par la société Showa Highpolymer sous la dénomination « Bionolle 1001 », le poly(butylène succinate adipate) est vendu sous la dénomination « Bionolle 3001 » par la société Showa Highpolymer et le poly(butylène adipate térephtalate) est commercialisé par la société BASF, sous la dénomination « Ecoflex ».

La composition de caoutchouc comporte préférentiellement plus de 5 pce de résine poly(alkylène-ester), plus préférentiellement de 10 à 60 pce, en particulier de 15 à 55 pce, en vue d'optimiser les propriétés de rigidité et d'hystérèse en fonction des applications visées.

### II.3 - Charge renforçante

La composition de la bande de roulement du pneumatique selon l'invention comporte une charge renforçante inorganique (telle que de la silice) dans une proportion de 100 à 150 pce, préférentiellement de 105 à 145 pce.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16387. A titre de charge inorganique renforçante, on citera également les charges minérales du type alumineuse, en particulier de l'alumine (Al2O3) ou des (oxyde)hydroxydes d'aluminium, ou encore des oxydes de titane renforçants.

Selon un mode de réalisation préférentiel de l'invention, la charge inorganique renforçante comprend de 50 à 100% en masse de silice ; en d'autres termes, la silice représente 50 à 100% en masse de la charge inorganique renforçante.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Le taux de charge inorganique renforçante, en particulier de silice, est de préférence supérieur à 100 pce et inférieur à 150 pce, plus préférentiellement compris dans un domaine de 105 à 145 pce.

Selon un mode de réalisation avantageux, la composition de la bande de roulement peut comporter du noir de carbone. Le noir de carbone, lorsqu'il est présent, est utilisé de préférence à un taux inférieur à 20 pce, plus préférentiellement inférieur à 10 pce (par exemple entre 0,5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances apportées par la charge inorganique renforçante.

Pour coupler la charge inorganique renforçante à l'élastomère diénique, on utilise de manière bien connue un agent de couplage (ou agent de liaison) destiné à assurer une connexion suffisante, de nature chimique et/ou physique, entre la charge inorganique (surface de ses particules) et l'élastomère diénique. Cet agent de couplage est au moins bifonctionnel. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) Z - A - Sₓ - A - Z ,

dans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 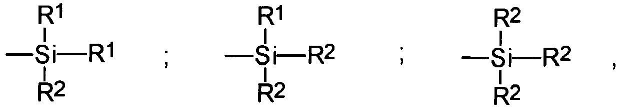 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)Silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifoncfionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2008/055986, WO 2010/072685.

Bien entendu pourraient être également utilisés des mélanges des agents de couplage précédemment décrits, comme décrit notamment dans la demande WO 2006/125534 précitée.

La teneur en agent de couplage est préférentiellement comprise entre 2 et 20 pce, plus préférentiellement entre 3 et 15 pce.

### II.4 - Système plastifiant

La composition de la bande de roulement du pneumatique selon l'invention a pour autre caractéristique essentielle de comporter un système plastifiant comprenant :
- selon un taux A compris entre 5 et 60 pce, une résine hydrocarbonée présentant une Tg supérieure à 20°C ;
- selon un taux B compris entre 5 et 60 pce, un plastifiant liquide à 20°C dont la Tg est inférieure à -20°C ;
- étant entendu que A+B est supérieur à 40 pce.

Préférentiellement le taux de système plastifiant total A + B est compris dans un domaine de 50 à 100 pce, plus préférentiellement de 50 à 80 pce.

Le plastifiant liquide est liquide à 20 °C, il est dit à « basse Tg », c'est-à-dire qu'il présente par définition une Tg inférieure à -20 °C, de préférence inférieure à -40 °C.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (20°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les agents plastifiants liquides choisis dans le groupe constitué par les polymères diéniques liquides, les huiles polyoléfiniques, les huiles naphténiques, les huiles paraffiniques, les huiles DAE (*Distillate Aromatic Extracts*), les huiles MES (*Medium Extracted Solvates*), les huiles TDAE (*Treated Distillate Aromatic Extracts*), les huiles RAE (*Residual Aromatic Extracts*), les huiles TRAE (*Treated Residual Aromatic Extracts*), les huiles SRAE (*Safety Residual Aromatic Extracts*), les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

Selon un mode de réalisation préférentiel de l'invention, le plastifiant liquide, notamment huile de pétrole, est du type non aromatique. Un plastifiant liquide est qualifié de non aromatique dès lors qu'il présente une teneur en composés aromatiques polycycliques, déterminé avec l'extrait dans du DMSO selon la méthode IP 346, de moins de 3 % en poids, par rapport au poids total du plastifiant. A ce titre peut être utilisé préférentiellement un agent plastifiant liquide choisi dans le groupe constitué par les huiles MES, les huiles TDAE, les huiles naphténiques (à basse ou haute viscosité, notamment hydrogénées ou non), les huiles paraffiniques et les mélanges de ces huiles. Conviennent également comme huile de pétrole les huiles RAE, les huiles TRAE et les huiles SRAE ou les mélanges de ces huiles, qui contiennent de faibles teneurs en composés polycycliques.

Selon un autre mode de réalisation particulier, le plastifiant liquide est un dérivé terpénique ; à titre d'exemple peut être cité notamment le produit « Dimarone » de Yasuhara.

Conviennent également les polymères liquides issus de la polymérisation d'oléfines ou de diènes, comme par exemple ceux choisis dans le groupe constitué par les polybutènes, les polydiènes, en particulier les polybutadiènes, les polyisoprènes, les copolymères de butadiène et d'isoprène, les copolymères de butadiène ou d'isoprène et de styrène, et les mélanges de ces polymères liquides. La masse molaire moyenne en nombre de tels polymères liquides est préférentiellement comprise dans un domaine allant de 500 g/mol à 50 000 g/mol, plus préférentiellement de 1000 g/mol à 10 000 g/mol. A titre d'exemple peuvent être cités notamment les produits « Ricon » de la société Sartomer.

Selon un autre mode de réalisation préférentiel de l'invention, le plastifiant liquide est une huile végétale. A titre préférentiel est utilisée une huile choisie dans le groupe constituée par les huiles de lin, carthame, soja, maïs, coton, navette, ricin, abrasin, pin, tournesol, palme, olive, noix de coco, arachide, pépin de raisin, et les mélanges de ces huiles, en particulier une huile de tournesol. Cette huile végétale, particulièrement huile de tournesol, est plus préférentiellement une huile riche en acide oléique, c'est-à-dire que l'acide gras (ou l'ensemble des acides gras si plusieurs sont présents) dont elle dérive comporte de l'acide oléique selon une fraction massique au moins égale à 60%, plus préférentiellement au moins égale à 70%, en particulier égale ou supérieure à 80%.

Selon un autre mode de réalisation particulier de l'invention, le plastifiant liquide est un éther ; peuvent être cités par exemple les polyéthylène glycols ou les polypropylène glycols.

Conviennent également les plastifiants liquides choisis dans le groupe constitué par les plastifiants esters, les plastifiants phosphates, les plastifiants sulfonates et les mélanges de ces composés. Conviennent notamment les triesters choisis dans le groupe constitué par les triesters d'acide carboxylique, d'acide phosphorique, d'acide sulfonique et les mélanges de ces triesters. A titre d'exemples de plastifiants esters d'acide carboxylique, on peut citer notamment les composés choisis dans le groupe constitué par les trimellitates, les pyromellitates, les phtalates, les 1,2-cyclohexane dicarboxylates, les adipates, les azélates, les sébaçates, les triesters de glycérol et les mélanges de ces composés. Parmi les triesters, on peut citer en particulier les triesters de glycérol, de préférence constitués majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides ; plus préférentiellement, qu'il soit d'origine synthétique ou naturelle, l'acide gras utilisé est constitué pour plus de 60%, plus préférentiellement encore pour plus de 70% en poids d'acide oléique ; de tels triesters (trioléates) à fort taux d'acide oléique, d'origine naturelle ou de synthèse, sont bien connus, ils ont été décrits par exemple dans la demande WO 02/088238, à titre d'agents plastifiants dans des bandes de roulement pour pneumatiques. A titre de plastifiants phosphates, on peut citer par exemple ceux qui contiennent entre 12 et 30 atomes de carbone, par exemple le trioctyle phosphate.

La résine hydrocarbonée présente une Tg supérieure à 20°C.

La dénomination "résine" est réservée dans la présente demande, par définition, à un composé qui est solide à température ambiante (20°C), par opposition notamment à un agent plastifiant liquide tel qu'une huile.

Les résines hydrocarbonées sont des polymères bien connus de l'homme du métier, essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods*"). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 30°C, notamment comprise entre 30°C et 95°C.

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*)*.* La température de ramollissement d'une résine hydrocarbonée est généralement supérieure d'environ 50 à 60°C à sa valeur de Tg. Le point de ramollissement est mesuré selon la norme ISO 4625 (méthode « Ring and Ball »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage. L'appareillage utilisé est par exemple une chaîne chromatographique "Waters alliance" selon les conditions suivantes : solvant d'élution : le tétrahydrofurane ; température 35°C ; concentration 1 g/litre ; débit :1 ml/min ; volume injecté : 100 µl ; étalonnage de Moore avec des étalons de polystyrène ; jeu de 3 colonnes "Waters" en série ("Styragel HR4E", "Styragel HR1" et "Styragel HR 0.5") ; détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn). Toutes les valeurs de masses molaires indiquées dans la présente demande sont donc relatives à des courbes d'étalonnages réalisées avec des étalons de polystyrène.

Selon un mode de réalisation préférentiel de l'invention, la résine hydrocarbonée présente au moins une quelconque, plus préférentiellement l'ensemble des caractéristiques suivantes :
- une Tg supérieure à 20°C (en particulier compris entre 30°C et 100°C), plus préférentiellement supérieure à 30°C (en particulier entre 30 C et 95°C);
- un point de ramollissement supérieur à 50°C (en particulier compris entre 50°C et 150°C) ;
- une masse molaire moyenne en nombre (Mn) comprise entre 400 et 2000 g/mol, préférentiellement entre 500 et 1500 g/mol ;
- un indice de polymolécularité (Ip) inférieur à 3, préférentiellement à 2 (rappel : Ip = Mw/Mn avec Mw masse molaire moyenne en poids).

A titres d'exemples de telles résines hydrocarbonées, on peut citer celles choisies dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère terpène phénol, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C₅/ styrène ou résines coupe C₅/ coupe C₉, ou encore par la société Struktol sous dénomination "40 MS" ou "40 NS" (mélanges de résines aromatiques et/ou aliphatiques).

### II.5 - Additifs divers

Les compositions de caoutchouc des bandes de roulement des pneumatiques conformes à l'invention comportent également tout ou partie des additifs usuels habituellement utilisés dans les compositions d'élastomères destinées à la fabrication de bandes de roulement, comme par exemple des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### II.6 - Préparation des compositions de caoutchouc

Les compositions utilisées dans les bandes de roulement des pneumatiques de l'invention peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- malaxer thermomécaniquement (par exemple en une ou plusieurs fois) le ou les élastomères diéniques avec la charge inorganique renforçante, l'agent de couplage, le cas échéant le noir de carbone, le système plastifiant et la résine poly(alkylène-ester), jusqu'à atteindre une température maximale comprise entre 110°C et 190°C (phase dite « non-productive ») ;
- refroidir l'ensemble à une température inférieure à 100°C ;
- incorporer ensuite, au cours d'une seconde étape (dite « productive »), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base (le ou les élastomères diéniques, le système plastifiant, la charge inorganique renforçante, l'agent de couplage et la résine poly(alkylène-ester), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une bande de roulement.

L'invention concerne les pneumatiques précédemment décrits tant à l'état cru (c'est à dire, avant cuisson) qu'à l'état cuit (c'est à dire, après réticulation ou vulcanisation).

### III - EXEMPLES DE REALISATION DE L'INVENTION

### III.1 - Préparation des compositions

On procède pour les essais qui suivent de la manière suivante : on introduit dans un mélangeur interne (taux de remplissage final : environ 70% en volume), dont la température initiale de cuve est d'environ 60 °C, successivement l'élastomère diénique, la charge inorganique renforçante (silice), le système plastifiant et la résine poly(alkylène-ester), ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre et un accélérateur type sulfénamide sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'une bande de roulement.

### III.2 - Essais

Les essais qui suivent démontrent l'augmentation de la rigidité à basse déformation des compositions des bandes de roulement des pneumatiques selon l'invention, sans affecter leur hystérèse.

Pour cela, sept compositions de caoutchouc pour bande de roulement ont été préparées comme indiqué précédemment, six conformément à l'invention (notées ci-après C.2 à C.7) et une non conformément à l'invention (composition témoin notée ci-après C.1).

Leurs formulations sont présentées dans le tableau 1 annexé.

La composition C.1 est une composition témoin, à base de SBR, utilisable dans des bandes de roulement de « Pneus Verts » (à faible résistance au roulement) pour véhicules de tourisme.
Les compositions C.2 à C.7 sont aussi à base de SBR. Toutes les compositions C.1 à C.7 comportent par ailleurs des taux élevés de charge inorganique renforçante et de système plastifiant. Le système plastifiant comporte une résine hydrocarbonée (résine C5/C9), un plastifiant liquide (mélange d'huile de tournesol, huile TDAE et huile MES).

Les compositions C.2 à C.7 diffèrent uniquement de la composition témoin C.1 par l'ajout d'une résine poly(alkylène-ester). Notamment C.2 et C.3 comportent respectivement 10 et 40 pce de poly(butylène adipate térephtalate) (en abrégé PBAT), C.4 et C.5 respectivement 10 et 40 pce de poly(butylène succinate) (en abrégé PBS), C.6 et C.7 respectivement 10 et 40 pce de poly(butylène succinate adipate) (en abrégé PBSA).

Les propriétés des compositions après cuisson (vulcanisation), ont été résumées dans le tableau 2 annexé.

On note que les compositions C.2 à C.7 présentent une rigidité à basse déformation (MA10) qui est toujours supérieure à celle de la composition témoin, ce qui est synonyme pour l'homme du métier d'une amélioration du comportement routier des pneumatiques. La rigidité des compositions est particulièrement augmentée pour les compositions comportant plus de 10 pce de résine poly(alkylène-ester) (en l'occurrence, dans les exemples C.3, C.5 et C.7, 40 pce).

Par ailleurs, l'hystérèse (représentée par Tan(δ)ₘₐₓ à 23°C) des compositions C.2 à C.7 reste identique à celle de la composition témoin, ce qui est un indicateur clair pour l'homme du métier d'une résistance au roulement équivalente à celle de la composition témoin.

En conclusion, les résultats de ces essais démontrent que l'emploi d'une résine poly(alkylène-ester), notamment en présence de taux de charge et de plastifiants élevés, permet d'obtenir une composition de caoutchouc pour bande de roulement de pneumatique présentant une rigidité à basse déformation supérieure, synonyme d'une amélioration du comportement routier, tout en conservant une résistance au roulement équivalente.

**Tableau 1**

| Composition n° | C.1 | C.2 | C.3 | C.4 | C.5 | C.6 | C.7 |
|---|---|---|---|---|---|---|---|
| SBR (1) | 100 | 100 | 100 | 100 | 100 | 100 | 100 |
| Charge inorganique(2) | 110 | 110 | 110 | 110 | 110 | 110 | 110 |
| Noir de carbone (3) | 4 | 4 | 4 | 4 | 4 | 4 | 4 |
| Silane (4) | 8.8 | 8.8 | 8.8 | 8.8 | 8.8 | 8.8 | 8.8 |
| Poly(alkylène-ester) (5) | - | 10 | 40 | - | - | - | - |
| Poly(alkylène-ester) (6) | - | - | - | 10 | 40 | - | - |
| Poly(alkylène-ester) (7) | - | - | - | - | - | 10 | 40 |
| Plastifiant liquide (8) | 33 | 33 | 33 | 33 | 33 | 33 | 33 |
| Résine (9) | 22 | 22 | 22 | 22 | 22 | 22 | 22 |
| Anti-oxydant (10) | 1.5 | 1.5 | 1.5 | 1.5 | 1.5 | 1.5 | 1.5 |
| DPG (11) | 2 | 2 | 2 | 2 | 2 | 2 | 2 |
| ZnO (12) | 1.8 | 1.8 | 1.8 | 1.8 | 1.8 | 1.8 | 1.8 |
| Acide stéarique (13) | 2 | 2 | 2 | 2 | 2 | 2 | 2 |
| CBS (14) | 2 | 2 | 2 | 2 | 2 | 2 | 2 |
| Soufre | 1.3 | 1.3 | 1.3 | 1.3 | 1.3 | 1.3 | 1.3 |

| | | | | | | | |
|---|---|---|---|---|---|---|---|
| (1) SBR solution (taux exprimés en SBR sec) avec 40% de styrène et 12 % de motifs butadiène 1-2 (Tg = -28°C) ; (2) Silice (« Ultrasil 7000 GR » de la société Degussa) ; (3) Noir de carbone N234 ; (4) Silane TESPT (« Si69 » de la société Degussa) ; (5) PBAT : poly(butylène adipate/téréphtalate) (« Ecoflex F BX 7011 » de la société BASF) ; (6) PBS : poly(butylène succinate), (« Bionolle 1001 » de la société Showa Highpolymer) ; (7) PBSA : poly(butylène succinate adipate), (« Bionolle 3001 » de la société Showa Highpolymer) ; (8) Mélange d'huile végétale de tournesol («Lubrirob Tod 1880» de la société Novance), de TDAE (« Vivatec 500 » de la société Klaus Dahleke) et d'huile d'extension MES du SBR (« Catenex SNR » de la société Shell) ; (9) Résine C5/C9 («Escorez ECR-373» de la société Exxon) ; (10) N-1,3-diméthylbutyl-N-phénylparaphénylènediamine (« Santoflex 6-PPD » de la société Flexsys) ; (11) DPG = Diphénylguanidine (« Perkacit DPG » de la société Flexsys) ; (12) oxyde de zinc (grade industriel - société Umicore) ; (13) stéarine ("Pristerene" de la société Uniquema) ; (14) N-cycloheayl-2-benzothiazyl-sulfénamide (« Santocure CBS » de la société Flexsys). | | | | | | | |

**Tableau 2**

| Composition n° | C.1 | C.2 | C.3 | C.4 | C.5 | C.6 | C.7 |
|---|---|---|---|---|---|---|---|
| MA10 | 5.0 | 5.5 | 7.5 | 6.0 | 7.8 | 5.8 | 6.7 |
| Tan(δ)ₘₐₓ à 23°C | 0.31 | 0.31 | 0.31 | 0.31 | 0.31 | 0.31 | 0.31 |

## Revendications

1. Pneumatique dont la bande de roulement comprend une composition de caoutchouc comportant au moins :
- un élastomère diénique ;
- 100 à 150 pce d'une charge inorganique renforçante ;
- une résine thermoplastique poly (alkylène-ester) ;
- un système plastifiant comprenant :
- selon un taux A compris entre 5 et 60 pce, une résine hydrocarbonée présentant une Tg (mesurée selon la norme ASTM D3418) supérieure à 20°C ;
- selon un taux B compris entre 5 et 60 pce, un plastifiant liquide à 20°C dont la Tg (mesurée selon la norme ASTM D3418) est inférieure à -20°C ;
- étant entendu que A+B est supérieur à 40 pce.

2. Pneumatique selon la revendication 1, dans lequel l'élastomère diénique est choisi dans le groupe constitué par les polybutadiènes (BR), les polyisoprènes (IR) de synthèse, le caoutchouc naturel (NR), les copolymères de butadiène, les copolymères d'isoprène et les mélanges de ces élastomères.

3. Pneumatique selon la revendication 2, dans lequel l'élastomère diénique est choisi dans le groupe constitué par les polybutadiènes, les copolymères de butadiène et les mélanges de ces élastomères.

4. Pneumatique selon la revendication 3, dans lequel l'élastomère diénique est un copolymère styrène-butadiène (SBR).

5. Pneumatique selon la revendication 4, dans lequel le taux de SBR est compris dans un domaine de 50 à 100 pce.

6. Pneumatique selon l'une quelconque des revendications 1 à 5, dans lequel le taux de résine poly(alkylène-ester) est supérieur à 5 pce, de préférence compris dans un domaine de 10 à 60 pce.

7. Pneumatique selon l'une quelconque des revendications 1 à 6, dans lequel l'ester est choisi dans le groupe constitué par les adipates, les succinates et leurs mélanges.

8. Pneumatique selon l'une quelconque des revendications de 1 à 7, dans lequel l'alkylène est choisi dans le groupe constitué par méthylène, éthylène, propylène, butylène et leurs mélanges.

9. Pneumatique selon la revendication 8, dans lequel l'alkylène est un butylène.

10. Pneumatique selon l'une quelconque des revendications de 1 à 9, dans lequel la résine poly (alkylène-ester) est choisie dans le groupe constitué par les poly(alkylène-adipate), les poly(alkylène-succinate) et leurs mélanges.

11. Pneumatique selon l'une quelconque des revendications 1 à 10, dans lequel A+B est compris dans un domaine de 50 à 100 pce.

12. Pneumatique selon l'une quelconque des revendications 1 à 11, dans lequel la résine hydrocarbonée thermoplastique est choisie dans le groupe constitué par les résines d'homopolymères ou copolymères de cyclopentadiène ou dicyclopentadiène, les résines d'homopolymères ou copolymères terpène, les résines d'homopolymères ou copolymères de coupe C5, les résines d'homopolymères ou copolymères de coupe C9, les résines d'homopolymères ou copolymères d'alpha-méthyl-styrène et les mélanges de ces résines.

13. Pneumatique selon l'une quelconque des revendications 1 à 12, dans le plastifiant liquide est choisi dans le groupe constitué par les polymères diéniques liquides, les huiles polyoléfines, les huiles naphténiques, les huiles paraffiniques, les huiles DAE, les huiles MES, les huiles TDAE, les huiles RAE, les huiles TRAE, les huiles SRAE, les huiles minérales, les huiles végétales, les plastifiants éthers, les plastifiants esters, les plastifiants phosphates, les plastifiants sulfonates et les mélanges de ces composés.

14. Pneumatique selon la revendication 13, dans lequel l'agent plastifiant liquide est choisi dans le groupe constitué par les huiles MES, les huiles TDAE, les huiles naphténiques, les huiles végétales et les mélanges de ces huiles.

15. Pneumatique selon l'une quelconque des revendications 1 à 14, dans lequel la charge inorganique renforçante comporte de la silice.

## Patentansprüche

1. Reifen, dessen Lauffläche eine Kautschukzusammensetzung umfasst, welche mindestens:
- ein Dienelastomer;
- 100 bis 150 phe eines verstärkenden anorganischen Füllstoffs;
- ein thermoplastisches Poly(alkylenester)harz;
- ein Weichmachersystem, umfassend:
- gemäß einem Gehalt A zwischen 5 und 60 phe, ein Kohlenwasserstoffharz mit einer Tg (gemessen gemäß ASTM-Norm D3418) von mehr als 20°C;
- gemäß einem Gehalt B zwischen 5 und 60 phe, einen bei 20°C flüssigen Weichmacher mit einer Tg (gemessen gemäß ASTM-Norm D3418) von weniger als -20°C;
- mit der Maßgabe, dass A+B mehr als 40 phe beträgt;
umfasst.

2. Reifen nach Anspruch 1, wobei das Dienelastomer aus der Gruppe bestehend aus Polybutadienen (BR), synthetischen Polyisoprenen (IR), Naturkautschuk (NR), Butadien-Copolymeren, Isopren-Copolymeren und Mischungen dieser Elastomere ausgewählt ist.

3. Reifen nach Anspruch 2, wobei das Dienelastomer aus der Gruppe bestehend aus Polybutadienen, Butadien-Copolymeren und Mischungen dieser Elastomere ausgewählt ist.

4. Reifen nach Anspruch 3, wobei es sich bei dem Dienelastomer um ein Styrol-Butadien-Copolymer (SBR) handelt.

5. Reifen nach Anspruch 4, wobei der Gehalt von SBR in einem Bereich von 50 bis 100 phe liegt.

6. Reifen nach einem der Ansprüche 1 bis 5, wobei der Gehalt von Poly(alkylenester)harz mehr als 5 phe beträgt und vorzugsweise in einem Bereich von 10 bis 60 phe liegt.

7. Reifen nach einem der Ansprüche 1 bis 6, wobei der Ester aus der Gruppe bestehend aus Adipaten, Succinaten und Mischungen davon ausgewählt ist.

8. Reifen nach einem der Ansprüche 1 bis 7, wobei das Alkylen aus der Gruppe bestehend aus Methylen, Ethylen, Propylen, Butylen und Mischungen davon ausgewählt ist.

9. Reifen nach Anspruch 8, wobei es sich bei dem Alkylen um ein Butylen handelt.

10. Reifen nach einem der Ansprüche 1 bis 9, wobei das Poly(alkylenester)harz aus der Gruppe bestehend aus Poly(alkylenadipat)en, Poly(alkylensuccinat)en und Mischungen davon ausgewählt ist.

11. Reifen nach einem der Ansprüche 1 bis 10, wobei A+B in einem Bereich von 50 bis 100 phe liegt.

12. Reifen nach einem der Ansprüche 1 bis 11, wobei das thermoplastische Kohlenwasserstoffharz aus der Gruppe bestehend aus Homopolymer- oder Copolymerharzen von Cyclopentadien oder Dicyclopentadien, Terpen-Homopolymer- oder -Copolymerharzen, C5-Schnitt-Homopolymer- oder -Copolymerharzen, C9-Schnitt-Homopolymer- oder -Copolymerharzen, Homopolymer- oder Copolymerharzen von alpha-Methylstyrol und Mischungen dieser Harze ausgewählt ist.

13. Reifen nach einem der Ansprüche 1 bis 12, wobei der flüssige Weichmacher aus der Gruppe bestehend aus flüssigen Dienpolymeren, Polyolefinölen, naphthenischen Ölen, Paraffinölen, DAE-Ölen, MES-Ölen, TDAE-Ölen, RAE-Ölen, TRAE-Ölen, SRAE-Ölen, Mineralölen, Pflanzenölen, Ether-Weichmachern, Ester-Weichmachern, Phosphat-Weichmachern, Sulfonat-Weichmachern und Mischungen dieser Verbindungen ausgewählt ist.

14. Reifen nach Anspruch 13, wobei der flüssige Weichmacher aus der Gruppe bestehend aus MES-Ölen, TDAE-Ölen, naphthenischen Ölen, Pflanzenölen und Mischungen dieser Öle ausgewählt ist.

15. Reifen nach einem der Ansprüche 1 bis 14, wobei der verstärkende anorganische Füllstoff Kieselsäure umfasst.

## Claims

1. Tyre, the tread of which comprises a rubber composition comprising at least:
- a diene elastomer;
- from 100 to 150 phr of a reinforcing inorganic filler;
- a poly(alkylene ester) thermoplastic resin;
- a plasticizing system comprising:
- according to a content A of between 5 and 60 phr, a hydrocarbon resin exhibiting a Tg (measured according to standard ASTM D3418) of greater than 20°C;
- according to a content B of between 5 and 60 phr, a plasticizer which is liquid at 20°C, the Tg (measured according to standard ASTM D3418) of which is less than -20°C;
- it being understood that A+B is greater than 40 phr.

2. Tyre according to Claim 1, in which the diene elastomer is selected from the group consisting of polybutadienes (BRs), synthetic polyisoprenes (IRs), natural rubber (NR), butadiene copolymers, isoprene copolymers and the mixtures of these elastomers.

3. Tyre according to Claim 2, in which the diene elastomer is selected from the group consisting of polybutadienes, butadiene copolymers and the mixtures of these elastomers.

4. Tyre according to Claim 3, in which the diene elastomer is a styrene/butadiene copolymer (SBR).

5. Tyre according to Claim 4, in which the SBR content is within a range from 50 to 100 phr.

6. Tyre according to any one of Claims 1 to 5, in which the content of poly(alkylene ester) resin is greater than 5 phr, preferably within a range from 10 to 60 phr.

7. Tyre according to any one of Claims 1 to 6, in which the ester is selected from the group consisting of adipates, succinates and their mixtures.

8. Tyre according to any one of Claims 1 to 7, in which the alkylene is selected from the group consisting of methylene, ethylene, propylene, butylene and their mixtures.

9. Tyre according to Claim 8, in which the alkylene is a butylene.

10. Tyre according to any one of Claims 1 to 9, in which the poly(alkylene ester) resin is selected from the group consisting of poly(alkylene adipate)s, poly(alkylene succinate)s and their mixtures.

11. Tyre according to any one of Claims 1 to 10, in which A+B is within a range from 50 to 100 phr.

12. Tyre according to any one of Claims 1 to 11, in which the thermoplastic hydrocarbon resin is selected from the group consisting of cyclopentadiene homopolymer or copolymer resins, dicyclopentadiene homopolymer or copolymer resins, terpene homopolymer or copolymer resins, C₅ fraction homopolymer or copolymer resins, C₉ fraction homopolymer or copolymer resins, α-methylstyrene homopolymer or copolymer resins and the mixtures of these resins.

13. Tyre according to any one of Claims 1 to 12, in which the liquid plasticizing agent is selected from the group consisting of liquid diene polymers, polyolefin oils, naphthenic oils, paraffinic oils, DAE oils, MES oils, TDAE oils, RAE oils, TRAE oils, SRAE oils, mineral oils, vegetable oils, ether plasticizers, ester plasticizers, phosphate plasticizers, sulphonate plasticizers and the mixtures of these compounds.

14. Tyre according to Claim 13, in which the liquid plasticizing agent is selected from the group consisting of MES oils, TDAE oils, naphthenic oils, vegetable oils and the mixtures of these oils.

15. Tyre according to any one of Claims 1 to 14, in which the reinforcing inorganic filler comprises silica.
